# FASCICULE DE BREVET EUROPEEN

(11) **EP 4 002 211 B1**
(45) Date de publication et mention de la délivrance du brevet: **13.09.2023**
(21) Numéro de dépôt: 21207205.2
(22) Date de dépôt: 09.11.2021
(51) Int. Cl.: G06K 19/077, G06K 19/07

(54) **CARTE À MICROCIRCUIT**
MIKROSCHALTKREIS-KARTE
MICROCIRCUIT BOARD

(30) Priorité: 16.11.2020 FR 2011736
(43) Date de publication de la demande: 25.05.2022
(73) Titulaire: STMicroelectronics (Rousset) SAS, 13790 Rousset (FR)
(72) Inventeur: ROUY, Olivier, 13790 PEYNIER (FR)
(74) Mandataire: Cabinet Beaumont

(56) Documents cités:
- GB-A- 2 563 599
- US-A1- 2019 244 210
- US-B1- 9 230 255

## Description

### Domaine technique

La présente description concerne de façon générale les dispositifs électroniques et, plus particulièrement, les cartes à microcircuit ("smart card" en anglais).

### Technique antérieure

De nombreuses applications font usage de cartes à microcircuit, par exemple des cartes de paiement, des cartes de transport, des cartes d'identification personnelle, etc. Parmi les cartes à microcircuit actuelles, on connaît notamment des cartes équipées d'un capteur biométrique. Le capteur biométrique permet typiquement d'effectuer des vérifications d'identité, par exemple lors de chaque utilisation de la carte. Le document US 2019/0244210 A1 décrit un exemple d'une carte à microcircuits comprenant un capteur d'empreintes digitales.

### Résumé de l'invention

Il existe un besoin d'améliorer les cartes à microcircuit actuelles, notamment les cartes à microcircuits actuelles comportant un capteur biométrique. Par exemple, il serait souhaitable qu'une carte à microcircuit puisse afficher une information à destination d'un utilisateur.

Un mode de réalisation pallie tout ou partie des inconvénients des cartes à microcircuit actuelles, notamment des cartes à microcircuits actuelles comportant un capteur biométrique.

Un mode de réalisation prévoit une carte à microcircuit comprenant :
un premier circuit configuré pour fournir une tension d'alimentation à partir d'une puissance d'alimentation reçue par la carte ;
un deuxième circuit relié au premier circuit par un conducteur électrique et configuré pour être alimenté par la tension d'alimentation ; et
une diode électroluminescente ayant une première borne reliée au conducteur et une deuxième borne reliée à une première borne du deuxième circuit,
dans laquelle, lors d'une première phase de fonctionnement, le premier circuit est configuré pour fournir une première valeur de la tension d'alimentation et le deuxième circuit est configuré pour appliquer une première tension sur la première borne du deuxième circuit de sorte que la diode reste éteinte, et, lors d'une deuxième phase de fonctionnement, le premier circuit est configuré pour fournir une deuxième valeur de la tension d'alimentation et le deuxième circuit est configuré pour appliquer une deuxième tension sur la première borne du deuxième circuit de sorte que l'émission ou non de lumière par la diode est commandée par une valeur d'une tension sur ledit conducteur.

Un mode de réalisation prévoit un procédé de commande d'une diode électroluminescente d'une carte à microcircuit comprenant un premier circuit et un deuxième circuit reliés par un conducteur électrique, la diode ayant une première borne reliée au conducteur et une deuxième borne reliée à une première borne du deuxième circuit, le procédé comprenant les étapes suivantes :
lors d'une première phase de fonctionnement :
fournir, par le premier circuit, une tension d'alimentation à une première valeur à partir d'une puissance d'alimentation reçue par la carte ;
alimenter le deuxième circuit avec la tension d'alimentation ; et
appliquer, par le deuxième circuit, une première tension sur la première borne du deuxième circuit de sorte que la diode reste éteinte, et,
lors d'une deuxième phase de fonctionnement :
   fournir, par le premier circuit, la tension d'alimentation à une deuxième valeur à partir de la puissance d'alimentation reçue par la carte ;
   alimenter le deuxième circuit avec la tension d'alimentation ; et
   appliquer, par le deuxième circuit, une deuxième tension sur la première borne du deuxième circuit de sorte que l'émission ou non de lumière par la diode est commandée par une valeur d'une tension sur ledit conducteur.

Selon un mode de réalisation, les premier et deuxième circuits sont configurés pour communiquer via ledit conducteur pendant la première phase.

Selon un mode de réalisation, pendant la première phase, les premier et deuxième circuits sont configurés pour mettre en oeuvre des commutations de la tension sur ledit conducteur entre une valeur nulle et la première valeur de la tension d'alimentation.

Selon un mode de réalisation, pendant la deuxième phase, le premier circuit ou le deuxième circuit, de préférence le premier circuit, est configuré pour mettre en oeuvre une ou plusieurs commutations de la tension sur ledit conducteur entre la valeur nulle et la deuxième valeur de la tension d'alimentation.

Selon un mode de réalisation, la deuxième valeur de la tension d'alimentation est supérieure à la première valeur de la tension d'alimentation.

Selon un mode de réalisation, la deuxième valeur de la tension d'alimentation est supérieure au seuil de mise en conduction de la diode, et la première valeur de la tension d'alimentation est inférieure au seuil de mise en conduction de la diode.

Selon un mode de réalisation, la deuxième valeur de la tension d'alimentation est inférieure à une tension maximale d'alimentation du deuxième circuit.

Selon un mode de réalisation, la carte comprend en outre un capteur biométrique, de préférence un capteur d'empreinte, configuré pour être alimenté par la tension d'alimentation fournie par le premier circuit.

Selon un mode de réalisation, le deuxième circuit et le capteur biométrique sont configurés pour communiquer l'un avec l'autre.

Selon un mode de réalisation, le capteur est configuré pour fonctionner avec une tension d'alimentation comprise dans une plage de valeurs inférieures à la deuxième valeur et comprenant la première valeur, le capteur étant en outre configuré pour supporter une tension d'alimentation à la deuxième valeur.

Selon un mode de réalisation, le premier circuit est en outre configuré pour mettre le conducteur dans un état haute impédance pour synchroniser une commutation, par le deuxième circuit, de la première tension à la deuxième tension sur la première borne du deuxième circuit.

Selon un mode de réalisation, la première borne est l'anode de la diode, la deuxième borne est la cathode de la diode, la première tension est égale à la tension d'alimentation à la première valeur et la deuxième tension est nulle.

Selon un mode de réalisation, la première borne est la cathode de la diode, la deuxième borne est l'anode de la diode, la première tension est nulle et la deuxième tension est égale à la tension d'alimentation à la deuxième valeur.

Selon un mode de réalisation, la carte comprend en outre un conducteur supplémentaire reliant le premier circuit au deuxième circuit, et une diode électroluminescente supplémentaire ayant une première borne reliée au conducteur supplémentaire et une deuxième borne reliée à la première borne du deuxième circuit.

Selon un mode de réalisation, la puissance d'alimentation est reçue via un champ électromagnétique émis par un lecteur de carte ou via un contact électrique direct de la carte avec un lecteur de carte.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 représente, de façon très schématique et sous la forme de blocs, un mode de réalisation d'une carte à microcircuit communiquant avec un lecteur ;
la figure 2 est un organigramme illustrant un mode de mise en oeuvre d'un procédé dans une carte du type de celle de la figure 1 ;
la figure 3 représente des chronogrammes illustrant un exemple de mise en oeuvre du procédé de la figure 2, par la carte de la figure 1 ;
la figure 4 représente, de façon très schématique et sous la forme de blocs, une variante de réalisation de la carte de la figure 1 ; et
la figure 5 représente, de façon très schématique et sous la forme de blocs, une autre variante de réalisation de la carte de la figure 1.

### Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation décrits ont été représentés et sont détaillés. En particulier, les échanges de données entre une carte à microcircuit et un lecteur de carte, de même que la fourniture d'une puissance d'alimentation par un lecteur à une carte à microcircuit, soit par l'intermédiaire d'un champ électromagnétique émis par le lecteur et reçu par la carte, soit par un contact électrique direct entre le lecteur et la carte, n'ont pas été détaillés, les modes de réalisation, les modes de mise en oeuvre et les variantes décrits étant compatibles avec les échanges de données usuels entre une carte et un lecteur et avec les fournitures usuelles de puissance d'alimentation par un lecteur à une carte.

Sauf précision contraire, lorsque l'on fait référence à deux éléments connectés entre eux, cela signifie directement connectés sans éléments intermédiaires autres que des conducteurs, et lorsque l'on fait référence à deux éléments reliés (en anglais "coupled") entre eux, cela signifie que ces deux éléments peuvent être connectés ou être reliés par l'intermédiaire d'un ou plusieurs autres éléments.

Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence sauf précision contraire à l'orientation des figures.

Sauf précision contraire, les expressions "environ", "approximativement", "sensiblement", et "de l'ordre de" signifient à 10 % près, de préférence à 5 % près.

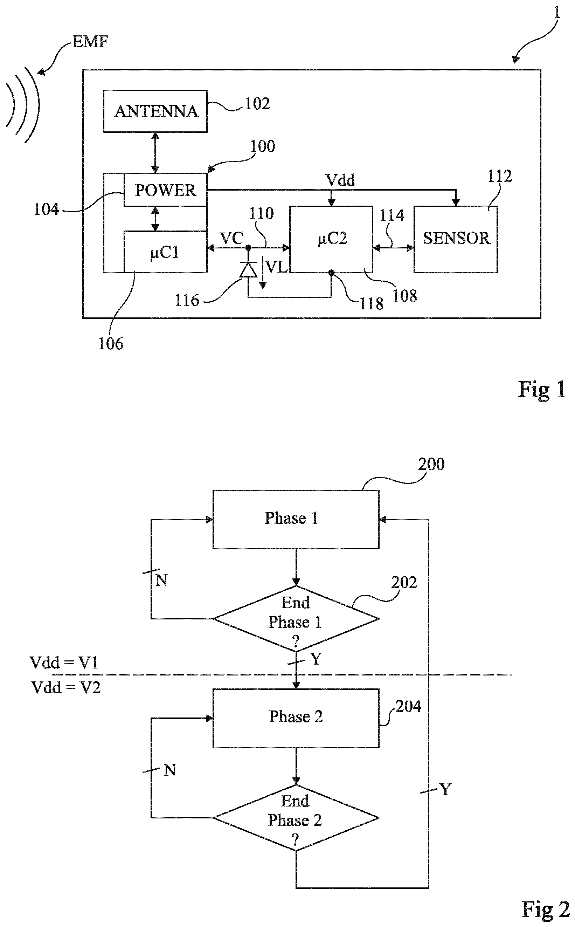

La figure 1 représente, de façon très schématique et sous la forme de blocs, un mode de réalisation d'une carte à microcircuit 1 communiquant avec un lecteur (non représenté). La carte 1 est par exemple une carte de paiement, une carte de transport, une carte d'identification personnelle, etc. Le lecteur est par exemple un terminal de paiement, une borne de validation de titre de transport, une borne de contrôle d'accès, etc.

Le lecteur est configuré pour émettre un champ électromagnétique EMF, par exemple un champ radiofréquence dont les longueurs d'onde sont, par exemple, comprises entre 3 KHz et 3 GHz.

Lorsque la carte 1 est située à portée du lecteur, elle reçoit, ou capte, le champ EMF.

La carte à microcircuit 1 comprend un circuit 100. Le circuit 100 est configuré pour générer une tension d'alimentation Vdd à partir du champ EMF reçu par la carte 1. Plus particulièrement, le circuit 100 est configuré pour fournir plusieurs valeurs de la tension Vdd.

Par exemple, la carte 1 comprend une antenne 102 (bloc "ANTENNA") captant le champ EMF et fournissant une tension et un courant correspondant au circuit 100. A titre d'exemple, le circuit 100 comprend un circuit 104 (bloc "POWER") configuré pour générer une tension continue (DC) à partir de la puissance fournie par l'antenne 102 au circuit 100, la tension Vdd étant, par exemple, obtenue à partir de cette tension continue.

A titre d'exemple, le circuit 100 comprend un microcontrôleur 106 (bloc "pC1"). Le microcontrôleur 106 est par exemple configuré pour commander un ou plusieurs modules de communication (non représentés) du circuit 100, ce ou ces modules permettant, par exemple, de retro-moduler le champ EMF reçu pour transmettre des données au lecteur, et, par exemple, de démoduler le champ EMF reçu pour recevoir des données du lecteur. Le microcontrôleur 106 est par exemple configuré pour commander le circuit 104.

Dans l'exemple de la figure 1, la carte 1 reçoit de l'énergie électrique pour son alimentation, c'est-à-dire une puissance d'alimentation, grâce au champ EMF émis par le lecteur.

Dans un autre exemple, non illustré, la carte 1 reçoit une puissance électrique d'alimentation fournie par le lecteur grâce à un contact électrique entre le lecteur et la carte 1. Dans cet autre exemple, la carte 1 peut être dépourvue d'antenne 102. Dans cet autre exemple, le circuit 100 est configuré pour générer la tension Vdd, pouvant prendre plusieurs valeurs, à partir de la puissance électrique fournie par le lecteur reçu par la carte 1. Par exemple, le circuit 104 est configuré pour recevoir une tension continue disponible sur un contact électrique de la carte 1, la tension Vdd étant, par exemple, obtenue à partir de cette tension continue. Dans cet autre exemple, la carte 1 comprend par exemple un module de communication commandé par son microcontrôleur 106 et configuré pour échanger des données avec le lecteur par l'intermédiaire de signaux transmis entre la carte 1 et le lecteur via des contacts électriques entre la carte 1 et le lecteur.

Dans encore un autre exemple, non illustré et correspondant à la combinaison des deux exemples ci-dessus, la carte 1 est configurée pour recevoir une puissance d'alimentation par l'intermédiaire d'un champ électromagnétique émis par un lecteur, mais aussi par l'intermédiaire d'un contact électrique avec un lecteur. La carte 1 est aussi configurée pour échanger des données avec un lecteur par l'intermédiaire du champ électromagnétique émis par le lecteur, mais aussi par l'intermédiaire de signaux électriques transmis entre la carte 1 et le lecteur via des contacts électriques entre la carte 1 et le lecteur.

Selon un mode de réalisation, le circuit 100, par exemple son microcontrôleur 106, comprend un élément sécurisé (non représenté) dans lequel sont stockées des données d'identification du détenteur de la carte 1.

La carte 1 comprend en outre un circuit 108 (bloc "pC2"), par exemple un microcontrôleur 108. Le microcontrôleur 108 est alimenté par la tension Vdd.

Au moins un conducteur électrique, typiquement un fil, relie le circuit 100, par exemple son microcontrôleur 106, au microcontrôleur 108. En figure 1, on n'a représenté qu'un seul conducteur électrique 110. Le fil conducteur 110 a une extrémité connectée au circuit 100, par exemple au microcontrôleur 106, de préférence à une entrée/sortie de type GPIO ("General Purpose Input Output" - entrée/sortie à usage général) du circuit 100 ou de son microcontrôleur 106.

Les circuits 100 et 108 sont configurés pour communiquer l'un avec l'autre via les conducteurs électriques qui les relient, notamment via le conducteur 110.

Par exemple, sur chacun des fils conducteurs, notamment le fil 110, via lesquels les circuits 100 et 108 communiquent, d'une part le circuit 100 ou son microprocesseur 106 et/ou, d'autre part, le microcontrôleur 108 sont configurés pour commuter une tension sur le fil entre une valeur basse nulle et une valeur haute égale à la valeur courante de la tension Vdd. Par exemple, lors d'une transmission d'un bit entre les circuits 100 et 108 via le conducteur 110, lorsqu'une tension VC sur le fil est nulle, cela code un premier état binaire du bit transmis, et lorsque cette tension VC est égale à Vdd, cela code un deuxième état binaire du bit transmis.

Selon un mode de réalisation, la carte 1 comprend un capteur biométrique 112 (bloc "SENSOR"). De préférence, le capteur 112 est un capteur d'empreintes digitales. Le capteur 112 est alimenté par la tension Vdd. En outre, le capteur 112 et le microcontrôleur 108 sont configurés pour communiquer l'un avec l'autre, par exemple via un ou plusieurs fils conducteurs 114 reliant les circuits 108 et 112, un seul fil conducteur 114 étant représenté en figure 1. A titre d'exemple, une tension sur chaque fil 114 peut être commutée entre une valeur basse nulle et une valeur haute égale à la valeur courante de la tension Vdd, pour coder respectivement un premier état binaire et un deuxième état binaire d'un bit transmis sur ce fil 114.

La carte 1 comprend en outre une diode électroluminescente ("Light Emitting Diode"), ou LED, 116. La LED 116 a une première borne, par exemple sa cathode en figure 1, reliée, par exemple connectée, au fil conducteur 110, et une deuxième borne, par exemple son anode en figure 1, reliée, par exemple connectée, à une borne 118 du circuit 108.

Dans une première phase de fonctionnement, le circuit 100 est configuré pour fournir la tension Vdd à une première valeur V1.

De préférence, la valeur V1 est telle que le microcontrôleur 108 est correctement alimenté, c'est-à-dire que le microcontrôleur 108 est en mesure de mettre en oeuvre ses diverses fonctionnalités lorsqu'il est alimenté par la tension Vdd à la valeur V1. Dit autrement, le microcontrôleur 108 est configuré pour être alimenté par une tension comprise entre une valeur haute VH1 et une valeur basse VL1, et la valeur V1 est comprise entre ces valeurs VL1 et VH1.

De même, de préférence, le capteur 112 est correctement alimenté par la tension Vdd à la valeur V1, c'est-à-dire que le capteur 112 est en mesure de mettre en oeuvre ses diverses fonctionnalités lorsqu'il est alimenté par la tension Vdd à la valeur V1. Dit autrement, le capteur 112 est configuré pour être alimenté par une tension comprise entre une valeur haute VH2 et une valeur basse VL2, et la valeur V1 est comprise entre ces valeurs VL2 et VH2.

Une tension à la valeur V1 n'est par exemple pas suffisante, si elle est appliquée aux bornes de la LED 116, pour que la LED 116 émette de la lumière. Dit autrement, la valeur V1 est inférieure au seuil Vth de mise en conduction de la LED 116.

En outre, pendant cette première phase de fonctionnement, le circuit 108 est configurée pour appliquer une première tension sur sa borne 118. La première tension appliquée à la borne 118 pendant la première phase, qui pourrait au plus être égale à la tension Vdd d'alimentation du circuit 108, c'est-à-dire à V1 pendant la première phase, est déterminée pour que la LED 116 ne s'allume pas quelle que soit la valeur de la tension VC sur le fil 110. Plus particulièrement, dans l'exemple de la figure 1 où l'anode de la LED 116 est reliée à la borne 118, cette première tension est la tension nulle. Ainsi, quelle que soit la valeur de la tension VC pendant la première phase, c'est-à-dire que la tension VC soit nulle ou égale à V1, la tension VL aux bornes de la LED 116, référencée par rapport la cathode de la LED 116, est nulle ou négative. La tension VL est donc inférieure au seuil Vth de mise en conduction de la LED 116 qui ne s'allume pas.

Selon un mode de réalisation, la première phase de fonctionnement de la carte 1 correspond à une phase de communication entre les circuits 106 et 108, pendant laquelle des données sont échangées entre ces circuits 106 et 108, notamment via le conducteur 110. De préférence, la communication entre le microcontrôleur 108 et le capteur 112 s'effectue également pendant la première phase.

Dans une deuxième phase de fonctionnement, le circuit 100 est configuré pour fournir la tension Vdd à une deuxième valeur V2. La valeur V2 est supérieure à la valeur V1.

De préférence, la valeur V2 est telle que le microcontrôleur 108 est correctement alimenté, c'est-à-dire que le microcontrôleur 108 est en mesure de mettre en oeuvre ses diverses fonctionnalités lorsqu'il est alimenté par la tension Vdd à la valeur V2. Dit autrement, la valeur V2 est comprise entre les valeurs VL1 et VH1.

En revanche, de préférence, la tension Vdd à la valeur V2 ne permet pas d'alimenter correctement le capteur 112. Dit autrement, la valeur V2 est, par exemple, supérieure à la valeur VH2. Ainsi, quand la tension Vdd est à la valeur V2, le capteur 112 n'est par exemple pas en mesure de mettre en oeuvre ses fonctionnalités.

Par ailleurs, la valeur V2 est déterminée de telle sorte que, lorsque la tension Vdd est à la valeur V2, le capteur 112 n'est pas détérioré ou détruit par cette valeur V2 de la tension d'alimentation Vdd. Dit autrement, le capteur 112 est configuré pour supporter la tension d'alimentation Vdd à la valeur V2.

La valeur V2 est en outre supérieure au seuil Vth de mise en conduction de la LED 116. Dit autrement, une tension à la valeur V2 est suffisante, si elle est appliquée aux bornes de la LED 116, pour que la LED 116 émette de la lumière.

Par ailleurs, pendant cette deuxième phase de fonctionnement, le circuit 108 est configuré pour appliquer une deuxième tension sur sa borne 118. Plus particulièrement, dans l'exemple de la figure 1 où l'anode de la LED 116 est reliée à la borne 118, cette deuxième tension est la tension d'alimentation Vdd, qui est alors égale à V2 pendant la deuxième phase de fonctionnement. Ainsi, selon la valeur de la tension VC pendant la deuxième phase, c'est-à-dire selon que la tension VC soit nulle ou égale à V2, la tension VL aux bornes de la LED 116 est respectivement égale à V2 ou nulle. Comme la valeur V2 est supérieur au seuil Vth de mise en conduction de la LED 116, il en résulte que le circuit 100 et/ou le circuit 108 commande des phases d'émission de lumière ou de non émission de lumière par la LED 116, en commutant la tension VC sur le fil 110 entre la valeur nulle et la valeur V2. Ainsi, la LED 116 peut être utilisée pour fournir des informations à un utilisateur de la carte 1, par exemple pour lui indiquer que la carte 1 a reconnu l'empreinte digitale de l'utilisateur en émettant de la lumière, ou par exemple pour séquencer une acquisition de données biométriques de référence par le capteur lors d'une phase d'enregistrement ("enrollment" en langue anglaise).

Selon un mode de réalisation, la deuxième phase de fonctionnement de la carte 1 correspond à une phase de commande de la LED 116. Pendant cette deuxième phase, aucune donnée n'est échangée entre les circuits 106 et 108, en particulier via le conducteur 110. De préférence, pendant la deuxième phase, la carte 1 ne communique pas avec le lecteur. Selon un mode de réalisation, le circuit 108 est configuré pour mettre en oeuvre, pendant la deuxième phase de fonctionnement, un mode basse consommation, par exemple un mode de veille, dans lequel le circuit 108 est en mesure de maintenir la deuxième tension sur la borne 118.

Dans la carte 1, le conducteur 110 permet non seulement aux circuits 106 et 108 de communiquer l'un avec l'autre pendant une première phase de fonctionnement, mais aussi de commander la LED 116 pendant une deuxième phase de fonctionnement. Cela est particulièrement avantageux car le nombre d'entrées/sorties du circuit 100, par exemple de son microcontrôleur 106, est généralement faible et limité, par exemple inférieur ou égal à 4.

En outre, du fait que le circuit 108 est configuré pour appliquer la première tension sur sa borne 118 pendant la première phase, cela permet d'empêcher l'émission de lumière par la LED 116 pendant une première phase de fonctionnement, nonobstant la communication entre les circuits 100 et 108 via le conducteur 110.

Le fait que le circuit 100 est configuré pour fournir la tension Vdd à la valeur V1 pendant la première phase de fonctionnement permet d'assurer le fonctionnement correct du capteur 112, et également de consommer moins d'énergie que pendant une deuxième phase où la tension Vdd est à la valeur V2.

La figure 2 est un organigramme illustrant un mode de mise en oeuvre d'un procédé dans une carte du type de celle de la figure 1. On considère ici à titre d'exemple que le procédé est mis en oeuvre dans la carte 1 décrite en relation avec la figure 1.

A une étape 200 (bloc "Phase 1"), le circuit 100 de la carte 1 fournit la tension Vdd d'alimentation du circuit 108 et du capteur 112 à la valeur V1. Pendant cette étape, le circuit 108 fournit la première tension sur sa borne 118, de sorte que la LED 116 connectée entre la borne 118 et le conducteur 110 reste éteinte. L'étape 200 correspond donc à la première phase de fonctionnement décrite en relation avec la figure 1.

A une étape 202 suivante (bloc "End Phase 1 ?"), les circuits 100 et 108 vérifient si la première phase de fonctionnement est terminée, ou, dit autrement, si l'étape 200 est terminée. Plus particulièrement, les circuits 100 et 108 déterminent si une deuxième phase de fonctionnement doit débuter. A titre d'exemple, seul l'un des circuits 100 et 108, de préférence le circuit 100, vérifie si la première phase est terminée, et, le cas échéant, l'indique ensuite à l'autre circuit.

Si la première phase n'est pas terminée (sortie N du bloc 202), la carte 1 reste dans la première phase de fonctionnement, avec la tension Vdd égale à V1 et la première tension sur la borne 118.

Si la première phase est terminée et que la carte 1 doit passer dans une deuxième phase de fonctionnement (sortie Y du bloc 202), le procédé se poursuit à une étape 204 (bloc "Phase 2").

A titre d'exemple, le passage à l'étape 204 est décidé par le circuit 100 et est indiqué au circuit 108 par le circuit 100, par exemple via un signal spécifique transmis sur le conducteur 110. Il est également possible que le passage à l'étape 204 soit décidé par le circuit 108 et soit indiqué au circuit 100 par le circuit 108, par exemple via un signal spécifique transmis sur le conducteur 110. Toutefois, de préférence, c'est le circuit 100 qui détermine le passage à une deuxième phase et qui l'indique au circuit 108. En effet, le circuit 100 est en mesure de synchroniser la mise en oeuvre d'une deuxième phase et les phases de communication de la carte 1 avec le lecteur, de sorte que la deuxième phase soit mise en oeuvre a un moment où la carte 1 et le lecteur ne communiquent pas, ce qui permet de limiter la consommation globale dans la carte.

A l'étape 204, le circuit 100 fournit la tension Vdd à la valeur V2. En outre, le circuit 108 applique la deuxième tension sur sa borne 118. Ainsi, l'émission ou non de lumière par la LED 116 est commandée par la valeur de la tension VC sur le fil 110, de la manière décrite précédemment en relation avec la figure 1.

A une étape 206 suivante (bloc "End Phase 2 ?"), les circuits 100 et 108 vérifient si la deuxième phase de fonctionnement est terminée, ou, dit autrement, si l'étape 204 est terminée. Plus particulièrement, les circuits 100 et 108 déterminent si une nouvelle première phase de fonctionnement doit débuter. A titre d'exemple, la fin de la deuxième phase est décidée par le circuit 100 qui indique la fin de la deuxième phase au circuit 102, par exemple grâce à un signal spécifique transmis via le conducteur 110.

Si la deuxième phase n'est pas terminée (sortie N du bloc 206), la carte 1 reste dans la deuxième phase de fonctionnement, avec la tension Vdd égale à V2 et la deuxième tension sur la borne 118.

Si la deuxième phase est terminée (sortie Y du bloc 206), le procédé se poursuit, par exemple, par une nouvelle étape 200, ou nouvelle première phase.

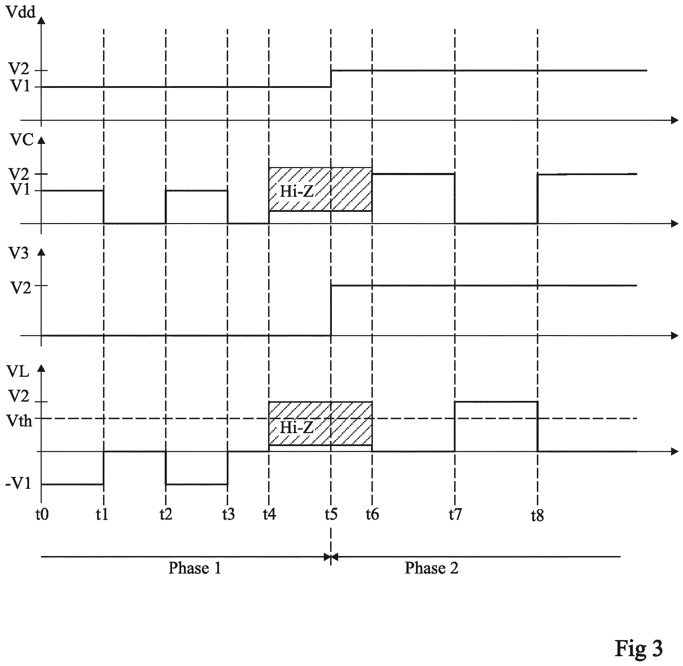

La figure 3 représente des chronogrammes de la tension Vdd, de la tension VC, d'une tension V3 sur la borne 118 et de la tension VL aux bornes de la LED 116, ces chronogrammes illustrant un exemple de mise en oeuvre du procédé de la figure 2, par la carte 1 de la figure 1.

A un instant t0, la carte 1 est dans une première phase de fonctionnement (étape 200, figure 2 - phase 1, figure 3). Ainsi, la tension Vdd est à la valeur V1 et la tension V3 est nulle.

Dans cet exemple, à l'instant t0, la tension VC sur le conducteur 110 est égale à Vdd, c'est-à-dire égale à V1. Il en résulte que la tension VL est négative et égale à -V1, et que la LED 116 reste éteinte.

A un instant suivant t1, la carte 1 est toujours dans la première phase de fonctionnement, et la tension VC est commutée, par exemple pour transmettre un nouveau bit sur le conducteur 110.

Dans cet exemple, à l'instant t1, la tension VC est commutée à la valeur nulle. Il en résulte que la tension VL commute à la valeur nulle, et que la LED 116 reste éteinte.

A un instant suivant t2, la carte 1 est toujours dans la première phase de fonctionnement, et la tension VC est commutée, par exemple pour transmettre un nouveau bit sur le conducteur 110.

Dans cet exemple, à l'instant t2, la tension VC sur le conducteur 110 est égale à Vdd, c'est-à-dire égale à V1. Il en résulte que la tension VL est négative et égale à -V1, et que la LED 116 reste éteinte.

A un instant suivant t3, la tension VC est commutée. Dans cet exemple, à l'instant t3, la tension VC est commutée à la valeur nulle. Il en résulte que la tension VL commute à la valeur nulle, et que la LED 116 reste éteinte.

A un instant t4 suivant, l'un des circuits 100 et 108, de préférence le circuit 100 comme cela été indiqué en relation avec la figure 2, détermine que la carte 1 doit basculer dans une deuxième phase de fonctionnement (sortie Y de l'étape 202, figure 2), et l'indique à l'autre circuit.

Selon un mode de réalisation, le passage d'une première phase de fonctionnement à une deuxième phase de fonctionnement comprend une phase de synchronisation consistant à mettre le conducteur 110 dans un état de haute impédance, comme cela est représenté par une zone hachurée Hi-Z en figure 3. L'une des bornes de la LED 116 reliée au conducteur 110 est alors également dans un état de haute impédance. La LED 116 reste donc éteinte. A titre d'exemple, la mise du conducteur 110 en état haute impédance est commandée par le circuit 100 et permet d'indiquer au circuit 108 qu'il peut changer la valeur de la tension V3 sur la borne 118 sans provoquer d'émission de lumière par la LED 116.

A un instant suivant t5, marquant le début de la deuxième phase (étape 204, figure 2 - phase 2, figure 3), le circuit 100 met la tension Vdd à la valeur V2, et le circuit 108 met la tension V3 à une valeur déterminée pour permettre de commander l'émission de lumière par la LED 116 avec la tension VC.

Dans cet exemple où l'anode de la LED 116 est reliée à la borne 118 (figure 1), à l'instant t5, le circuit 108 commute donc la tension V3 à la tension Vdd, ou, dit autrement, commute la tension V3 à la valeur V2.

A un instant t6 suivant, alors que la carte 1 est dans la deuxième phase de fonctionnement, le circuit 100 met fin à l'état haute impédance du conducteur 110 et commute la tension VC à une valeur nulle ou à la tension Vdd égale à V2.

Dans cet exemple, à l'instant t6, la tension VC est commutée à la tension Vdd, alors égale à V2. La tension VL est alors nulle, et la LED 116 reste éteinte.

A un instant t7 suivant, la carte 1 étant toujours dans la deuxième phase de fonctionnement, le circuit 100 ou le circuit 108, dans cet exemple le circuit 100, commande une phase d'émission de lumière par la LED 116 en commutant la tension VC.

Dans cet exemple, à l'instant t7, le circuit 100 commute la tension VC à la valeur nulle. Il en résulte que la tension VL est commutée à la valeur V2 supérieure au seuil Vth de mise en conduction de la LED 116, et que la LED 116 s'allume.

A un instant suivant t8, la carte 1 étant toujours dans la deuxième phase de fonctionnement, le circuit 100 ou le circuit 108, dans cet exemple le circuit 100, éteint la LED 116 en commutant la tension VC, dans cet exemple à la tension Vdd égale à V2. Il en résulte que la tension VL est commutée à la valeur nulle, et que la LED 116 s'éteint.

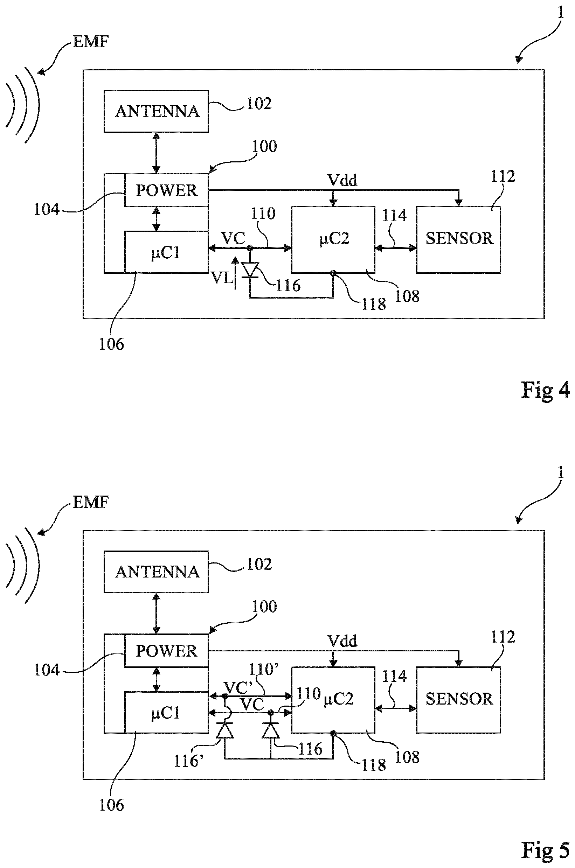

La figure 4 représente, de façon très schématique et sous la forme de blocs, une variante de réalisation de la carte 1 de la figure 1. La carte 1 de la figure 4 présente de très nombreux éléments structurels et fonctionnels en commun avec la carte 1 de la figure 1, et seules les différences entre ces deux cartes 1 seront ici mises en exergue.

La carte 1 de la figure 4 diffère de celle de la figure 1 uniquement en ce que l'anode de la LED 116 est reliée, par exemple connectée, au conducteur 110, et que sa cathode est reliée, par exemple connectée, à la borne 118 du microcontrôleur 108.

Dans la carte 1 de la figure 4, dans une première phase de fonctionnement, la première tension appliquée sur la borne 118 par le circuit 108 est la tension Vdd, alors égale à V1. De cette façon, lorsque la tension VC est nulle, la tension VL est négative et égale à -V1, d'où il résulte que la LED 116 reste éteinte, et, lorsque la tension VC est égale à la tension Vdd, donc à V1, la tension VL est nulle, d'où il résulte que la LED 116 reste éteinte. En résumé, pendant la première phase de fonctionnement, la LED 116 reste éteinte, même si les circuits 100 et 108 communiquent via le conducteur 110, en commutant la tension VC entre la valeur nulle et la tension Vdd.

Dans la carte 1 de la figure 4, dans une deuxième phase de fonctionnement, la première tension appliquée sur la borne 118 par le circuit 108 est la tension nulle. De cette façon, lorsque la tension VC est nulle, la tension VL est nulle, d'où il résulte que la LED 116 reste éteinte, et, lorsque la tension VC est égale à la tension Vdd, donc à V2, la tension VL est à la valeur V2 supérieure au seuil Vth de mise en conduction de la LED 116, d'où il résulte que la LED 116 émet de la lumière. En résumé, pendant la deuxième phase de fonctionnement, l'émission de lumière par la LED 116 est commandée en commutant la tension VC entre la valeur nulle et la tension Vdd.

La figure 5 représente, de façon très schématique et sous la forme de blocs, une autre variante de réalisation de la carte 1 de la figure 1. La carte 1 de la figure 5 présente de très nombreux éléments structurels et fonctionnels en commun avec la carte 1 de la figure 1, et seules les différences entre ces deux cartes 1 seront ici mises en exergue.

En figure 5, on a représenté un autre conducteur 110' reliant le circuit 100, par exemple son microcontrôleur 106, au circuit 108. Le conducteur 110', typiquement un fil, est de préférence connecté à une borne de type GPIO du circuit 100 ou de son microcontrôleur 106. Comme le conducteur 110, le conducteur 110' permet aux circuits 100 et 108 de communiquer l'un avec l'autre pendant une première phase de fonctionnement, en commutant une tension VC' du conducteur 110' entre une valeur nulle et la tension Vdd.

La carte 1 de la figure 5 diffère de celle de la figure 1 en ce qu'elle comprend une LED 116' supplémentaire dont une première borne, dans cet exemple sa cathode, est reliée, par exemple connectée, au conducteur supplémentaire 110', et dont une deuxième borne, dans cet exemple son anode, est reliée, par exemple connectée, à la borne 118 du circuit 108. Le seuil de mise en conduction de la LED 116' peut être différent du seuil Vth de mise en conduction de la LED 116. Toutefois, le seuil de mise en conduction de la LED 116' est, comme celui de la LED 116, inférieur à la valeur V2 de la tension Vdd.

Ainsi, la LED 116' peut être commandée, lors d'une deuxième phase de fonctionnement, par la tension VC' du conducteur 110', de façon similaire à la commande de la LED 116 par la tension VC du conducteur 110. En outre, lors d'une première phase de fonctionnement, la LED 116', comme la LED 116, reste éteinte, que la tension VC' soit nulle ou égale à la tension Vdd.

Selon un mode de réalisation, la LED 116 est configurée pour émettre de la lumière rouge, la LED 116' étant configurée pour émettre de la lumière verte.

Dans les modes de réalisation, modes de mise en oeuvre et variantes décrits précédemment, à titre d'exemple :
- le seuil de mise en conduction de la LED 116 est égal à 1,8 V ;
- la valeur V1 de la tension Vdd est égale à 1,8 V ;
- le capteur 112 est configuré pour être correctement alimenté par la tension Vdd lorsque cette dernière est comprise entre une valeur basse VL2 égale à 1,62 V, et une valeur haute VH2 égale à 1,98 V ;
- la valeur V2 de la tension Vdd est égale à 2 V ;
- le circuit 108 est configuré pour être correctement alimenté par la tension Vdd, qu'elle soit à la valeur V1 ou à la valeur V2 ; et
- dans le cas de la carte 1 de la figure 5, le seuil de mise en conduction de la LED 116' est, par exemple, inférieur à celui de la LED 116, par exemple égal à 1,7 V.

Divers modes de réalisation et variantes ont été décrits. La personne du métier comprendra que certaines caractéristiques de ces divers modes de réalisation et variantes pourraient être combinées, et d'autres variantes apparaîtront à la personne du métier. En particulier, la personne du métier est en mesure de mettre en oeuvre la carte 1 décrite en relation avec la figure 5 dans le cas où les LED 116 et 116' ont leurs anodes reliées aux conducteurs respectifs 110 et 110', et leurs cathodes reliées à la borne 118.

Enfin, la réalisation pratique des modes de réalisation et variantes décrits est à la portée de la personne du métier à partir des indications fonctionnelles données ci-dessus.

## Revendications

1. Carte à microcircuit (1) comprenant :
un premier circuit (100) configuré pour fournir une tension d'alimentation (Vdd) à partir d'une puissance d'alimentation (EMF) reçue par la carte ;
un deuxième circuit (108) relié au premier circuit (100) par un conducteur électrique (110 ; 110') et configuré pour être alimenté par la tension d'alimentation (Vdd) ; et
une diode électroluminescente (116 ; 116') ayant une première borne reliée au conducteur (110 ; 110') et une deuxième borne reliée à une première borne (118) du deuxième circuit (108),
dans laquelle, lors d'une première phase de fonctionnement, le premier circuit (100) est configuré pour fournir une première valeur (V1) de la tension d'alimentation (Vdd) et le deuxième circuit (108) est configuré pour appliquer une première tension sur la première borne (118) du deuxième circuit (108) de sorte que la diode (116 ; 116') reste éteinte, et, lors d'une deuxième phase de fonctionnement, le premier circuit (100) est configuré pour fournir une deuxième valeur (V2) de la tension d'alimentation (Vdd) et le deuxième circuit (108) est configuré pour appliquer une deuxième tension sur la première borne (118) du deuxième circuit (108) de sorte que l'émission ou non de lumière par la diode (116 ; 116') est commandée par une valeur d'une tension (VC ; VC') sur ledit conducteur (110 ; 110').

2. Procédé de commande d'une diode électroluminescente (116 ; 116') d'une carte à microcircuit (1) comprenant un premier circuit (100) et un deuxième circuit (108) reliés par un conducteur électrique (110 ; 110'), la diode (116 ; 116') ayant une première borne reliée au conducteur (110 ; 110') et une deuxième borne reliée à une première borne (118) du deuxième circuit (108), le procédé comprenant les étapes suivantes :
lors d'une première phase de fonctionnement :
fournir, par le premier circuit (100), une tension d'alimentation (Vdd) à une première valeur (V1) à partir d'une puissance d'alimentation (EMF) reçue par la carte (1) ;
alimenter le deuxième circuit (108) avec la tension d'alimentation ; et
appliquer, par le deuxième circuit (108), une première tension sur la première borne (118) du deuxième circuit (108) de sorte que la diode (116 ; 116') reste éteinte, et, lors d'une deuxième phase de fonctionnement :
fournir, par le premier circuit (100), la tension d'alimentation (Vdd) à une deuxième valeur (V2) à partir de la puissance d'alimentation (EMF) reçue par la carte (1) ;
alimenter le deuxième circuit (108) avec la tension d'alimentation (Vdd) ; et
appliquer, par le deuxième circuit (108), une deuxième tension sur la première borne (118) du deuxième circuit (108) de sorte que l'émission ou non de lumière par la diode (116 ; 116') est commandée par une valeur d'une tension (VC ; VC') sur ledit conducteur (110 ; 110').

3. Carte à microcircuit selon la revendication 1 ou procédé selon la revendication 2, dans lequel les premier et deuxième circuits (100, 108) sont configurés pour communiquer via ledit conducteur (110 ; 110') pendant la première phase.

4. Carte à microcircuit selon la revendication 1 ou 3 ou procédé selon la revendication 2 ou 3, dans lequel, pendant la première phase, les premier et deuxième circuits (100, 108) sont configurés pour mettre en oeuvre des commutations de la tension (VC ; VC') sur ledit conducteur (110 ; 110') entre une valeur nulle et la première valeur (V1) de la tension d'alimentation (Vdd).

5. Carte à microcircuit ou procédé selon la revendication 4, dans lequel, pendant la deuxième phase, le premier circuit (100) ou le deuxième circuit (108), de préférence le premier circuit (100), est configuré pour mettre en oeuvre une ou plusieurs commutations de la tension (VC ; VC') sur ledit conducteur (110 ; 110') entre la valeur nulle et la deuxième valeur (V2) de la tension d'alimentation (Vdd).

6. Carte à microcircuit selon l'une quelconque des revendications 1 et 3 à 5 ou procédé selon l'une quelconque des revendications 2 à 5, dans lequel la deuxième valeur (V2) de la tension d'alimentation (Vdd) est supérieure à la première valeur (V1) de la tension d'alimentation (Vdd).

7. Carte à microcircuit selon l'une quelconque des revendications 1 et 3 à 6 ou procédé selon l'une quelconque des revendications 2 à 6, dans lequel la deuxième valeur (V2) de la tension d'alimentation (Vdd) est supérieure au seuil (Vth) de mise en conduction de la diode (116 ; 116'), et la première valeur (V1) de la tension d'alimentation (Vdd) est inférieure au seuil (Vth) de mise en conduction de la diode (116 ; 116').

8. Carte à microcircuit selon l'une quelconque des revendications 1 et 3 à 7 ou procédé selon l'une quelconque des revendications 2 à 7, dans lequel la deuxième valeur (V2) de la tension d'alimentation (Vdd) est inférieure à une tension maximale d'alimentation du deuxième circuit (108) .

9. Carte à microcircuit selon l'une quelconque des revendications 1 et 3 à 8 ou procédé selon l'une quelconque des revendications 2 à 8, dans lequel la carte (1) comprend en outre un capteur biométrique (112), de préférence un capteur d'empreinte, configuré pour être alimenté par la tension d'alimentation (Vdd) fournie par le premier circuit (100) .

10. Carte à microcircuit ou procédé selon la revendication 9, dans lequel le deuxième circuit (108) et le capteur biométrique (112) sont configurés pour communiquer l'un avec l'autre.

11. Carte à microcircuit ou procédé selon la revendication 9 ou 10, dans lequel le capteur (112) est configuré pour fonctionner avec une tension d'alimentation comprise dans une plage de valeurs inférieures à la deuxième valeur (V2) et comprenant la première valeur (V1), le capteur (112) étant en outre configuré pour supporter une tension d'alimentation à la deuxième valeur (V2).

12. Carte à microcircuit selon l'une quelconque des revendications 1 et 3 à 11 ou procédé selon l'une quelconque des revendications 2 à 11, dans lequel le premier circuit (100) est en outre configuré pour mettre le conducteur (110 ; 110') dans un état haute impédance (Hi-Z) pour synchroniser une commutation, par le deuxième circuit (108), de la première tension à la deuxième tension sur la première borne du deuxième circuit (108).

13. Carte à microcircuit selon l'une quelconque des revendications 1 et 3 à 12 ou procédé selon l'une quelconque des revendications 2 à 12, dans lequel la première borne est l'anode de la diode, la deuxième borne est la cathode de la diode, la première tension est égale à la tension d'alimentation (Vdd) à la première valeur (V1) et la deuxième tension est nulle.

14. Carte à microcircuit selon l'une quelconque des revendications 1 et 3 à 12 ou procédé selon l'une quelconque des revendications 2 à 12, dans lequel la première borne est la cathode de la diode, la deuxième borne est l'anode de la diode, la première tension est nulle et la deuxième tension est égale à la tension d'alimentation (Vdd) à la deuxième valeur (V2).

15. Carte à microcircuit selon l'une quelconque des revendications 1 et 3 à 14 ou procédé selon l'une quelconque des revendications 2 à 14, dans lequel la carte (1) comprend en outre un conducteur supplémentaire (110') reliant le premier circuit (100) au deuxième circuit (108), et une diode électroluminescente supplémentaire (116') ayant une première borne reliée au conducteur supplémentaire (110') et une deuxième borne reliée à la première borne (118) du deuxième circuit (108).

16. Carte à microcircuit selon l'une quelconque des revendications 1 et 3 à 15 ou procédé selon l'une quelconque des revendications 2 à 15, dans lequel la puissance d'alimentation est reçue via un champ électromagnétique (EMF) émis par un lecteur de carte ou via un contact électrique direct de la carte (1) avec un lecteur de carte.

## Patentansprüche

1. Eine Smartcard (1), die Folgendes aufweist:
eine erste Schaltung (100), die eingerichtet ist, um eine Versorgungsspannung (Vdd) basierend auf einer Versorgungsleistung (EMF) zu liefern, die von der Karte empfangen wird;
eine zweite Schaltung (108), die mit der ersten Schaltung (100) über einen elektrischen Leiter (110; 110') gekoppelt und eingerichtet ist, mit der Versorgungsspannung (Vdd) versorgt zu werden; und
eine Leuchtdiode (116; 116') mit einem ersten Anschluss, der mit dem Leiter (110; 110') gekoppelt ist, und mit einem zweiten Anschluss, der mit einem ersten Anschluss (118) der zweiten Schaltung (108) gekoppelt ist,
wobei während einer ersten Betriebsphase die erste Schaltung (100) eingerichtet ist, einen ersten Wert der Versorgungsspannung (Vdd) zu liefern, und die zweite Schaltung (108) eingerichtet ist, eine erste Spannung an den ersten Anschluss (118) der zweiten Schaltung (108) anzulegen, so dass die Diode (116; 116') ausgeschaltet bleibt, und wobei während einer zweiten Betriebsphase die erste Schaltung (100) eingerichtet ist, einen zweiten Wert (V2) der Versorgungsspannung (Vdd) zu liefern, und die zweite Schaltung (108) eingerichtet ist, eine zweite Spannung an den ersten Anschluss (118) der zweiten Schaltung (108) anzulegen, so dass die Emission oder Nicht-Emission von Licht durch die Diode (116; 116') durch einen Wert einer Spannung (VC; VC') an dem Leiter (110; 110') gesteuert wird.

2. Ein Verfahren zum Steuern einer Leuchtdiode (116; 116') einer Smartcard (1), die eine erste Schaltung (100) und eine zweite Schaltung (108) aufweist, die durch einen elektrischen Leiter (110; 110') gekoppelt sind, wobei die Diode (116; 116') einen ersten Anschluss aufweist, der mit dem Leiter (110; 110') gekoppelt ist, und einen zweiten Anschluss, der mit einem ersten Anschluss (118) der zweiten Schaltung (108) gekoppelt ist, wobei das Verfahren die folgenden Schritte aufweist:
während einer ersten Betriebsphase:
Lieferung einer Versorgungsspannung (Vdd) mit einem ersten Wert (V1) durch die erste Schaltung (100), basierend auf einer von der Karte (1) empfangenen Versorgungsleistung (EMF);
Versorgung der zweiten Schaltung (108) mit der Versorgungsspannung; und
Anlegen einer ersten Spannung durch die zweite Schaltung (108) an den ersten Anschluss (118) der zweiten Schaltung (108), so dass die Diode (116; 116') ausgeschaltet bleibt, und,
während einer zweiten Betriebsphase:
Abgabe der Versorgungsspannung (Vdd) durch die erste Schaltung (100) auf einen zweiten Wert (V2), der auf der von der Karte (1) empfangenen Versorgungsleistung (EMF) basiert;
Versorgung der zweiten Schaltung (108) mit der Versorgungsspannung (Vdd); und
Anlegen durch die zweite Schaltung (108) einer zweiten Spannung an den ersten Anschluss (118) der zweiten Schaltung (108), so dass die Emission oder Nicht-Emission von Licht durch die Diode (116; 116') durch einen Wert einer Spannung (VC; VC') an dem Leiter (110; 110') gesteuert wird.

3. Smartcard nach Anspruch 1 oder Verfahren nach Anspruch 2, wobei die erste und die zweite Schaltung (100, 108) eingerichtet sind, während der ersten Phase über den Leiter (110; 110') zu kommunizieren.

4. Smartcard nach Anspruch 1 oder 3 oder Verfahren nach Anspruch 2 oder 3, wobei während der ersten Phase die erste und die zweite Schaltung (100, 108) eingerichtet sind, um Umschaltungen der Spannung (VC; VC') des Leiters (110; 110') zwischen einem Nullwert und dem ersten Wert (V1) der Versorgungsspannung (Vdd) zu implementieren.

5. Smartcard oder Verfahren nach Anspruch 4, wobei während der zweiten Phase die erste Schaltung (100) oder die zweite Schaltung (108), vorzugsweise die erste Schaltung (100), eingerichtet ist, um eine oder mehrere Umschaltungen der Spannung (VC; VC') des Leiters (110; 110') zwischen dem Nullwert und dem zweiten Wert (V2) der Versorgungsspannung (Vdd) zu implementieren.

6. Smartcard nach einem der Ansprüche 1 und 3 bis 5 oder Verfahren nach einem der Ansprüche 2 bis 5, wobei der zweite Wert (V2) der Versorgungsspannung (Vdd) größer ist als der erste Wert (V1) der Versorgungsspannung (Vdd).

7. Smartcard nach einem der Ansprüche 1 und 3 bis 6 oder Verfahren nach einem der Ansprüche 2 bis 6, wobei der zweite Wert (V2) der Versorgungsspannung (Vdd) größer ist als der Einschaltschwellenwert (Vth) der Diode (116; 116'), und der erste Wert (V1) der Versorgungsspannung (Vdd) kleiner ist als der Einschaltschwellenwert (Vth) der Diode (116; 116').

8. Smartcard nach einem der Ansprüche 1 und 3 bis 7 oder Verfahren nach einem der Ansprüche 2 bis 7, wobei der zweite Wert (V2) der Versorgungsspannung (Vdd) kleiner ist als eine maximale Versorgungsspannung der zweiten Schaltung (108).

9. Smartcard nach einem der Ansprüche 1 und 3 bis 8 oder Verfahren nach einem der Ansprüche 2 bis 8, wobei die Karte (1) ferner einen biometrischen Sensor (112), vorzugsweise einen Fingerabdrucksensor, aufweist, der eingerichtet ist, mit der von der ersten Schaltung (100) gelieferten Versorgungsspannung (Vdd) versorgt zu werden.

10. Smartcard oder Verfahren nach Anspruch 9, wobei die zweite Schaltung (108) und der biometrische Sensor (112) eingerichtet sind, um miteinander zu kommunizieren.

11. Smartcard oder Verfahren nach Anspruch 9 oder 10, wobei der Sensor (112) eingerichtet ist, mit einer Versorgungsspannung zu arbeiten, die in einem Wertebereich liegt, der kleiner als der zweite Wert (V2) ist und den ersten Wert (V1) aufweist, wobei der Sensor (112) ferner eingerichtet ist, einer Versorgungsspannung bei dem zweiten Wert (V2) standzuhalten.

12. Smartcard nach einem der Ansprüche 1 und 3 bis 11 oder Verfahren nach einem der Ansprüche 2 bis 11, wobei die erste Schaltung (100) ferner eingerichtet ist, den Leiter (110; 110') in einen Hochimpedanzzustand (Hi-Z) zu versetzen, um ein Umschalten von der ersten Spannung auf die zweite Spannung am ersten Anschluss der zweiten Schaltung (108) durch die zweite Schaltung (108) zu synchronisieren.

13. Smartcard nach einem der Ansprüche 1 und 3 bis 12 oder Verfahren nach einem der Ansprüche 2 bis 12, wobei der erste Anschluss die Anode der Diode ist, der zweite Anschluss die Kathode der Diode ist, die erste Spannung gleich der Versorgungsspannung (Vdd) mit dem ersten Wert (V1) ist und die zweite Spannung Null ist.

14. Smartcard nach einem der Ansprüche 1 und 3 bis 12 oder Verfahren nach einem der Ansprüche 2 bis 12, wobei der erste Anschluss die Kathode der Diode ist, der zweite Anschluss die Anode der Diode ist, die erste Spannung Null ist und die zweite Spannung gleich der Versorgungsspannung (Vdd) beim zweiten Wert (V2) ist.

15. Smartcard nach einem der Ansprüche 1 und 3 bis 14 oder Verfahren nach einem der Ansprüche 2 bis 14, wobei die Karte (1) ferner einen zusätzlichen Leiter (110') aufweist, der die erste Schaltung (100) mit der zweiten Schaltung (108) koppelt, und eine zusätzliche Leuchtdiode (116'), deren erster Anschluss mit dem zusätzlichen Leiter (110') gekoppelt ist und deren zweiter Anschluss mit dem ersten Anschluss (118) der zweiten Schaltung (108) gekoppelt ist.

16. Smartcard nach einem der Ansprüche 1 und 3 bis 15 oder Verfahren nach einem der Ansprüche 2 bis 15, wobei die Versorgungsenergie über ein elektromagnetisches Feld (EMF), das von einem Kartenleser ausgesendet wird, oder über einen direkten elektrischen Kontakt der Karte (1) mit einem Kartenleser empfangen wird.

## Claims

1. Smart card (1) comprising:
a first circuit (100) configured to deliver a power supply voltage (Vdd) based on a supply power (EMF) received by the card;
a second circuit (108) coupled to the first circuit (100) by an electric conductor (110; 110') and configured to be powered with the power supply voltage (Vdd); and
a light-emitting diode (116; 116') having a first terminal coupled to the conductor (110; 110') and a second terminal coupled to a first terminal (118) of the second circuit (108),
wherein, during a first operating phase, the first circuit (100) is configured to deliver a first value of the power supply voltage (Vdd) and the second circuit (108) is configured to apply a first voltage to the first terminal (118) of the second circuit (108) so that the diode (116; 116') remains off, and, during a second operating phase, the first circuit (100) is configured to deliver a second value (V2) of the power supply voltage (Vdd) and the second circuit (108) is configured to apply a second voltage to the first terminal (118) of the second circuit (108) so that the emission or not of light by the diode (116; 116') is controlled by a value of a voltage (VC; VC') on said conductor (110; 110').

2. Method of controlling a light-emitting diode (116; 116') of a smart card (1) comprising a first circuit (100) and a second circuit (108) coupled by an electric conductor (110; 110'), the diode (116; 116') having a first terminal coupled to the conductor (110; 110') and a second terminal coupled to a first terminal (118) of the second circuit (108), the method comprising the steps of:
during a first operating phase:
delivery, by the first circuit (100), of a power supply voltage (Vdd) at a first value (V1) based on a supply power (EMF) received by the card (1);
powering of the second circuit (108) with the power supply voltage; and
application, by the second circuit (108), of a first voltage to the first terminal (118) of the second circuit (108) so that the diode (116; 116') remains off, and, during a second operating phase:
delivery, by the first circuit (100), of the power supply voltage (Vdd) at a second value (V2) based on the supply power (EMF) received by the card (1);
powering of the second circuit (108) with the power supply voltage (Vdd); and
application, by the second circuit (108), of a second voltage to the first terminal (118) of the second circuit (108) so that the emission or not of light by the diode (116; 116') is controlled by a value of a voltage (VC; VC') on said conductor (110; 110').

3. Smart card according to claim 1 or method according to claim 2, wherein the first and second circuits (100, 108) are configured to communicate via said conductor (110; 110') during the first phase.

4. Smart card according to claim 1 or 3 or method according to claim 2 or 3, wherein, during the first phase, the first and second circuits (100, 108) are configured to implement switchings of the voltage (VC; VC') of said conductor (110; 110') between a null value and the first value (V1) of the power supply voltage (Vdd).

5. Smart card or method according to claim 4, wherein, during the second phase, the first circuit (100) or the second circuit (108), preferably the first circuit (100), is configured to implement one or a plurality of switchings of the voltage (VC; VC') of said conductor (110; 110') between the null value and the second value (V2) of the power supply voltage (Vdd).

6. Smart card according to any of claims 1 and 3 to 5 or method according to any of claims 2 to 5, wherein the second value (V2) of the power supply voltage (Vdd) is greater than the first value (V1) of the power supply voltage (Vdd).

7. Smart card according to any of claims 1 and 3 to 6 or method according to any of claims 2 to 6, wherein the second value (V2) of the power supply voltage (Vdd) is greater than the turn-on threshold (Vth) of the diode (116; 116'), and the first value (V1) of the power supply voltage (Vdd) is smaller than the turn-on threshold (Vth) of the diode (116; 116').

8. Smart card according to any of claims 1 and 3 to 7 or method according to any of claims 2 to 7, wherein the second value (V2) of the power supply voltage (Vdd) is smaller than a maximum power supply voltage of the second circuit (108).

9. Smart card according to any of claims 1 and 3 to 8 or method according to any of claims 2 to 8, wherein the card (1) further comprises a biometric sensor (112), preferably a fingerprint sensor, configured to be powered with the power supply voltage (Vdd) delivered by the first circuit (100).

10. Smart card or method according to claim 9, wherein the second circuit (108) and the biometric sensor (112) are configured to communicate with each other.

11. Smart card or method according to claim 9 or 10, wherein the sensor (112) is configured to operate with a power supply voltage comprised within a range of values smaller than the second value (V2) and comprising the first value (V1), the sensor (112) being further configured to withstand a power supply voltage at the second value (V2).

12. Smart card according to any of claims 1 and 3 to 11 or method according to any of claims 2 to 11, wherein the first circuit (100) is further configured to set the conductor (110; 110') to a high impedance state (Hi-Z) to synchronize a switching, by the second circuit (108), from the first voltage to the second voltage on the first terminal of the second circuit (108).

13. Smart card according to any of claims 1 and 3 to 12 or method according to any of claims 2 to 12, wherein the first terminal is the anode of the diode, the second terminal is the cathode of the diode, the first voltage is equal to the power supply voltage (Vdd) at the first value (V1) and the second voltage is null.

14. Smart card according to any of claims 1 and 3 to 12 or method according to any of claims 2 to 12, wherein the first terminal is the cathode of the diode, the second terminal is the anode of the diode, the first voltage is null and the second voltage is equal to the power supply voltage (Vdd) at the second value (V2).

15. Smart card according to any of claims 1 and 3 to 14 or method according to any of claims 2 to 14, wherein the card (1) further comprises an additional conductor (110') coupling the first circuit (100) to the second circuit (108), and an additional light-emitting diode (116') having a first terminal coupled to the additional conductor (110') and a second terminal coupled to the first terminal (118) of the second circuit (108).

16. Smart card according to any of claims 1 and 3 to 15 or method according to any of claims 2 to 15, wherein the supply power is received via an electromagnetic field (EMF) emitted by a card reader or via a direct electric contact of the card (1) with a card reader.
